# EUROPÄISCHE PATENTSCHRIFT

(11) **EP 0 501 167 B1**
(45) Veröffentlichungstag und Bekanntmachung des Hinweises auf die Patenterteilung: **05.07.1995**
(21) Anmeldenummer: 92101594.7
(22) Anmeldetag: 31.01.1992
(51) Int. Cl.: C09B 67/00, C09B 33/02, C09B 31/02, C09D 11/16, C09D 11/18

(54) **Flüssige Farbstoffzubereitungen**
Liquid dye preparations
Préparations liquides de colorants

(30) Priorität: 25.02.1991 DE 4105866
(43) Veröffentlichungstag der Anmeldung: 02.09.1992
(73) Patentinhaber: BASF Aktiengesellschaft, 67063 Ludwigshafen (DE)
(72) Erfinder: Dyllick-Brenzinger, Rainer, Dr., W-6940 Weinheim (DE); Hartmann, Heinz, W-6719 Bobenheim (DE); Bellaire, Helmut, W-6700 Ludwigshafen (DE); Zeidler, Georg, W-6701 Dannstadt-Schauernheim (DE)

(56) Entgegenhaltungen:
- EP-A- 0 065 252
- EP-A- 0 091 019
- DE-A- 1 619 319
- JP-A-58 173 171
- CHEMICAL ABSTRACTS, vol. 100, no. 22, Mai 1984, Columbus, Ohio, US; abstract
- no. 176656, 'Liquid for ink-jet recording' Seite 96 ;Spalte 2 ;

## Beschreibung

Die vorliegende Erfindung betrifft neue flüssige Farbstoffzubereitungen, enthaltend mindestens einen Farbstoff der Formel I 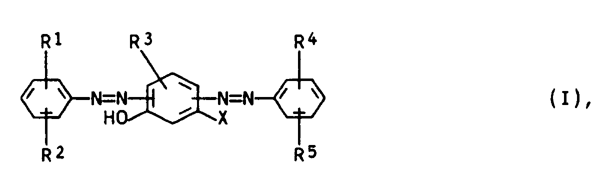
in der
- X: Hydroxy, Amino oder C₁-C₁₅-Monoalkylamino,
- R¹ und R⁴: gleich oder verschieden sind und unabhängig voneinander jeweils C₁-C₁₅-Alkoxycarbonyl, wobei die Alkylgruppe durch 1 bis 3 Sauerstoffatome in Etherfunktion unterbrochen sein kann, einen Rest der Formel 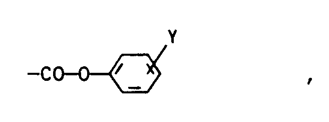 worin Y für C₁-C₁₃-Alkyl, das gegebenenfalls durch 1 bis 3 Sauerstoffatome in Etherfunktion unterbrochen ist, steht, oder C₁-C₁₅-Alkoxy das gegebenenfalls durch 1 bis 3 Sauerstoffatome in Etherfunktion unterbrochen ist,
- R² und R⁵: gleich oder verschieden sind und unabhängig voneinander jeweils Wasserstoff, Nitro oder Chlor und
- R³: Wasserstoff oder C₁-C₁₃-Alkyl bedeuten,
sowie als Lösungsmittel mindestens ein Produkt, ausgewählt aus der Gruppe, bestehend aus Benzylalkohol, Tridecanol, Isotridecanol, Glykolethern, Olein, Phthalsäure-C₄-C₁₃-dialkylestern, C₅-C₃₀-Chloralkanen, C₁-C₂₀-Alkane, die zweifach durch Phenyl substituiert sind, C₁-C₁₀-Dialkylnaphthalinen und teilhydriertem Terphenyl, sowie die Verwendung der neuen Farbstoffzubereitungen zur Herstellung von Farbbändern oder Kugelschreiberpasten.

Aus der EP-A-167 974 sind flüssige Farbstoffzubereitungen bekannt, die als Lösungsmittel organische Carbonate, z. B. Propylencarbonat, enthalten. Es hat sich jedoch gezeigt, daß diese Zubereitungen für die Herstellung von Farbbändern oder von Kugelschreiberpasten weniger geeignet sind.

Aufgabe der vorliegenden Erfindung war es nun, neue flüssige Farbstoffzubereitungen bereitzustellen, wobei als Farbstoffe Disazofarbstoffe mit einer Kupplungskomponente aus der Resorcin- oder Aminophenolreihe zur Anwendung gelangen sollten. Die neuen Zubereitungen sollten in vorteilhafter Weise für die Herstellung von Farbbändern oder Kugelschreiberpasten geeignet sein.

Demgemäß wurden die eingangs näher bezeichneten flüssigen Farbstoffzubereitungen gefunden.

Alle in der obengenannten Formel I auftretenden Alkylgruppen können sowohl geradkettige als auch verzweigt sein.

Die im folgenden verwendeten Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Encyklopädie der technischen Chemie, 4. Auflage, Band 7, Seiten 215 bis 217, sowie Band 11, Seiten 435 und 436.

Reste X sind beispielsweise Methylamino, Ethylamino, Propylamino, Isopropylamino, Butylamino, Isobutylamino, sec-Butylamino, Pentylamino, Isopentylamino, Neopentylamino, Hexylamino, Heptylamino, Octylamino, Isooctylamino, 2-Ethylhexylamino, Nonylamino, Isononylamino, Decylamino, Isodecylamino, Undecylamino, Dodecylamino, Tridecylamino, Isotridecylamino, Tetradecylamino oder Pentadecylamino.

Reste R¹ und R⁴ sind z. B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, tert-Pentyloxycarbonyl, Hexyloxycarbonyl, Heptyloxycarbonyl, 1-Ethylpentyloxycarbonyl, Octyloxycarbonyl, Isooctyloxycarbonyl, 2-Ethylhexyloxycarbonyl, Nonyloxycarbonyl, Isononyloxycarbonyl, Decyloxycarbonyl, Isodecyloxycarbonyl, Undecyloxycarbonyl, Dodecyloxycarbonyl, Tridecyloxycarbonyl, Isotridecyloxycarbonyl, Tetradecyloxycarbonyl, Pentadecyloxycarbonyl, 2-Methoxyethoxycarbonyl, 2-Ethoxyethoxycarbonyl, 2-Propoxyethoxycarbonyl, 2-Isopropoxyethoxycarbonyl, 2-Butoxyethoxycarbonyl, 2- oder 3-Methoxypropoxycarbonyl, 2- oder 3-Ethoxypropoxycarbonyl, 2- oder 3-Propoxypropoxycarbonyl, 2- oder 3-Butoxypropoxycarbonyl, 2- oder 4-Methoxybutoxycarbonyl, 2- oder 4-Ethoxybutoxycarbonyl, 2- oder 4-Propoxybutoxycarbonyl, 3,6-Dioxaheptyloxycarbonyl, 3,6-Dioxaoctyloxycarbonyl, 4,8-Dioxanonyloxycarbonyl, 3,7-Dioxaoctyloxycarbonyl, 3,7-Dioxanonyloxycarbonyl, 4,7-Dioxaoctyloxycarbonyl, 4,7-Dioxanonyloxycarbonyl, 2- oder 4-Butoxybutoxycarbonyl, 4,8-Dioxadecyloxycarbonyl, 3,6,9-Trioxadecyloxycarbonyl, 3,6,9-Trioxaundecyloxycarbonyl, Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, Heptyloxy, 1-Ethylpentyloxy, Octyloxy, Isooctyloxy, 2-Ethylhexyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, 2-Methoxyethoxy, 2-Ethoxyethoxy, 2-Propoxyethoxy, 2-Isopropoxyethoxy, 2-Butoxyethoxy, 2- oder 3-Methoxypropoxy, 2- oder 3-Ethoxypropoxy, 2- oder 3-Propoxypropoxy, 2- oder 3-Butoxypropoxy, 2- oder 4-Methoxybutoxy, 2- oder 4-Ethoxybutoxy, 2- oder 4-Propoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 2- oder 4-Butoxybutoxy, 4,8-Dioxadecyloxy, 3,6,9-Trioxadecyloxy oder 3,6,9-Trioxaundecyloxy.

Reste R³ und Y sind z. B. Methyl, Ethyl, Propyl, Isopropyl, Butyl, Isobutyl, sec-Butyl, Pentyl, Isopentyl, Neopentyl, tert-Pentyl, Hexyl, Heptyl, 1-Ethylpentyl, Octyl, Isooctyl, 2-Ethylhexyl, Nonyl, Isononyl, Decyl, Isodecyl, Undecyl, Dodecyl, Tridecyl oder Isotridecyl.

Reste Y sind weiterhin z. B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl oder 3,6,9-Trioxaundecyl.

Olein im erfindungsgemäßen Sinne bezeichnet technische Ölsäure, wie sie bei der Fettspaltung entsteht. Sie kann noch geringe Mengen an Stearinsäure, Palmitinsäure und anderen Fettsäuren enthalten.

Als Lösungsmittel für die erfindungsgemäßen Farbstoffzubereitungen kommen z. B. Benzylalkohol, Tridecanol, Isotridecanol, Glykolether, wie 2-Methoxyethanol, 2-Ethoxyethanol, 2-Propoxyethanol, 2-Isopropoxyethanol, 2-Butoxyethanol, 2-Phenoxyethanol, 1,2-Dimethoxyethan, 1,2-Diethoxyethan, 1,2-Dipropoxyethan, 1,2-Diisopropoxyethan, 1,2-Dibutoxyethan, 1,2-Diphenoxyethan, 2- oder 3-Methoxypropanol, 2- oder 3-Ethoxypropanol, 2- oder 3-Isopropoxypropanol, 2- oder 3-Butoxypropanol, 2- oder 3-Phenoxypropanol, 1,2- oder 1,3-Dimethoxypropan, 1,2- oder 1,3-Diethoxypropan, 1,2- oder 1,3-Dipropoxypropan, 1,2- oder 1,3-Diisopropoxypropan, 1,2- oder 1,3-Dibutoxybutan oder 1,2- oder 1,2-Diphenoxypropan, Olein, Phthalsäure-C₄-C₁₃-dialkylester, wie Dibutylphthalat, Diisobutylphthalat, Di-secbutylphthalat, Dipentylphthalat, Diisopentylphthalat, Dihexylphthalat, Diheptylphthalat, Dioctylphthalat, Diisooctylphthalat, Bis(2-ethylhexyl)phthalat, Dinonylphthalat, Diisononylphthalat, Didecylphthalat, Diisodecylphthalat, Diundecylphthalat, Didocylphthalat, Ditridecylphthalat oder Diisotridecylphthalat, C₅-C₃₀-Chloralkane, wie Chloreicosan oder Chlortetracosan, C₁-C₂₀-Alkane, die zweifach durch Phenyl substituiert sind, wie Diphenyldecan oder Diphenyltetradecan, C₁-C₁₀-Dialkylnaphthaline, wie Diisopropylnaphthalin, teilhydriertes Terphenyl, wie Verbindungen der Formel 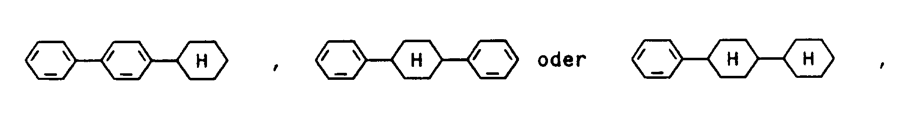
oder Mischungen dieser Lösungsmittel in Betracht.

Bevorzugt sind flüssige Farbstoffzubereitungen, enthaltend mindestens einen Farbstoff der Formel Ia 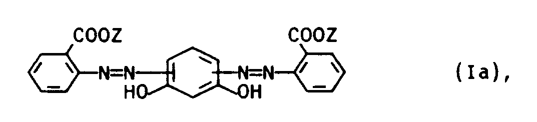
in der Z C₅-C₁₅-Alkyl, das gegebenenfalls durch 1 bis 3 Sauerstoffatome in Etherfunktion unterbrochen ist, oder einen Rest der Formel 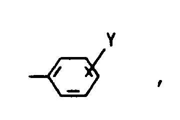
worin Y die obengenannte Bedeutung besitzt, bedeuten.

Bevorzugt sind weiterhin flüssige Farbstoffzubereitungen, enthaltend 10 bis 80 Gew.-%, bezogen auf das Gewicht der Präparation, an Farbstoff der Formel I.

Bevorzugt sind weiterhin flüssige Farbstoffzubereitungen, enthaltend als Lösungsmittel mindestens ein Produkt, ausgewählt aus der Gruppe, bestehend aus Benzylalkohol, Tridecanol, Isotridecanol, Glykolmonoethern, Olein, Phthalsäure-C₄-C₁₃-dialkylester und C₁-C₁₀-Dialkylnaphthalinen.

Besonders bevorzugt sind flüssige Farbstoffzubereitungen, enthaltend mindestens einen Farbstoff der Formel Ia, in der Z C₈-C₁₃-Alkyl, insbesondere 2-Ethylhexyl oder Isotridecyl, bedeutet.

Weiterhin besonders bevorzugt sind flüssige Farbstoffzubereitungen, enthaltend 20 bis 80 Gew.-%, vorzugsweise 30 bis 70 und insbesondere 40 bis 60 Gew.-%, jeweils bezogen auf das Gewicht der Präparation, an Farbstoff der Formel I.

Weiterhin besonders bevorzugt sind flüssige Farbstoffzubereitungen, enthaltend als Lösungsmittel mindestens ein Produkt, ausgewählt aus der Gruppe, bestehend aus Benzylalkohol, 2-Phenoxyethanol, Olein, Phthalsäure-C₈-dialkylester und Diisopropylnaphthalin.

Zur Herstellung der erfindungsgemäßen Farbstoffzubereitungen werden ein oder mehrere Farbstoffe der Formel I in der obengenannten Konzentration in einem oder mehrerer der obengenannten Lösungsmittel gelöst.

Die Farbstoffe der Formel I sind an sich bekannt und beispielsweise in der EP-A-91 019 beschrieben. Sie weisen in der Regel einen gelben bis roten Farbton auf.

Die erfindungsgemäßen Farbstoffzubereitungen weisen eine hohe Lagerstabilität auf und eignen sich in vorteilhafter Weise zur Herstellung von Farbbändern für Matrixdrucker, Schreibmaschinen oder Kettendrucker, oder zur Herstellung von Kugelschreiberpasten. Die Herstellung von Farbbändern ist beispielsweise in Coating 1972, Seiten 72 und 73 sowie 213 und 214, beschrieben.

Um den im Bereich der Farbbänder und der Kugelschreiberpasten vorherrschenden schwarzen Farbton zu erreichen, werden die erfindungsgemäßen Farbstoffzubereitungen mit weiteren Farbstoffen, z. B. mit C.I. Solvent Violet 8, C.I. Solvent Blue 4 und C.I. Solvent Black 5 oder mit C.I. Solvent Violet 8 und C.I. Solvent Blue 64, gemischt.

Eine geeignete Schwarzmischung für die Herstellung eines Farbbands enthält z. B.
- 20 bis 40 Gew.-Teile erfindungsgemäßer Farbstoffzubereitung
- 20 bis 35 Gew.-Teile C.I. Solvent Violet 8
- 5 bis 15 Gew.-Teile C.I. Solvent Blue 4 und
- 25 bis 45 Gew.-Teile Solvent Black 5.

Zur Herstellung eines Farbbands wird diese Mischung noch mit Mineralölen, nicht trocknenden, tierischen oder pflanzlichen Ölen, wie Klauenöl, Knochenöl, Rüböl, Erdnußöl, Spermöl, Rizinusöl, Rapsöl oder Schweineschmalz, und gegebenenfalls Olein in einer Kugelmühle, Perlmühle oder in einem Dreiwalzwerk vermahlen und auf ein Basisgewebe aus Baumwolle, Naturseide oder Polyamid gebracht.

Eine geeignete Schwarzmischung für die Herstellung einer Kugelschreiberpaste enthält z. B
- 5 bis 20 Gew.-Teile erfindungsgemäßer Farbstoffzubereitung
- 5 bis 15 Gew.-Teile C.I. Solvent Violet 8 und
- 5 bis 15 Gew.-Teile C.I. Solvent Blue 64
Um die notwendige Viskosität (7 bis 20 Pas) der Kugelschreiberpaste einzustellen, wird diese Mischung noch mit Harzen, z. B. mit sauren Phthalatharzen oder insbesondere mit neutralen Aldehyd- oder Ketonharzen sowie mit Olein oder einer anderen Säure versetzt.

Die mittels der neuen Farbstoffzubereitungen erhältlichen Farbbandfarben oder Kugelschreiberpasten zeichnen sich durch vorteilhafte anwendungstechnische Eigenschaften aus. Insbesondere sind sie sublimationsecht. Dies ist bei den bisher verwendeten Farbstoffmischungen praktisch nicht gewährleistet, da sie als Orange-Komponente C.I. Solvent Orange 3 enthalten, das stark sublimiert.

Die folgenden Beispiele sollen die Erfindung näher erläutern.

### Beispiel 1

50 g des Farbstoffs der Formel 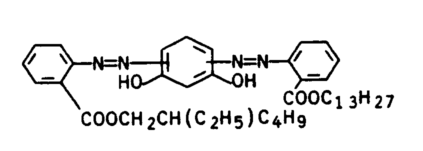
wurden bei 90°C in einer Mischung aus 25 g Olein und 25 g Diisopropylnaphthalin gelöst. Man erhielt eine lagerstabile flüssige Zubereitung.

### Beispiel 2

a) 60 g des Farbstoffs der Formel 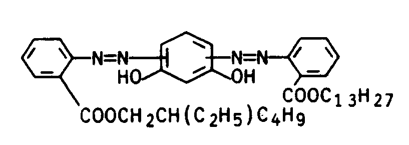 wurden bei 90°C in 40 g 2-Phenoxyethanol gelöst. Man erhielt eine lagerstabile flüssige Zubereitung.
b) 15 g der unter a) beschriebenen Zubereitung wurden mit 4 g Olein, 4 g 1,2-Propylenglykol, 33 g eines sauren Phthalatharzes (Säurezahl: 80), 8 g C.I. Solvent Violet 8 und 8 g C.I. Solvent Blue 64 verrührt. Man erhielt eine sublimationsechte schwarze Kugelschreiberpaste.
c) Die unter b) genannte Prozedur wurde wiederholt, jedoch wurden 33 g eines neutralen Ketonharzes (Säurezahl: 0) verwendet. Man erhielt ebenfalls eine sublimationsechte schwarze Kugelschreiberpaste.
d) Die unter b) genannte Prozedur wurde wiederholt, jedoch wurden 33 g eines neutralen Aldehydharzes (Säurezahl: < 3) verwendet. Man erhielt ebenfalls eine sublimationsechte schwarze Kugelschreiberpaste.

## Patentansprüche

1. Flüssige Farbstoffzubereitungen, enthaltend mindestens einen Farbstoff der Formel I 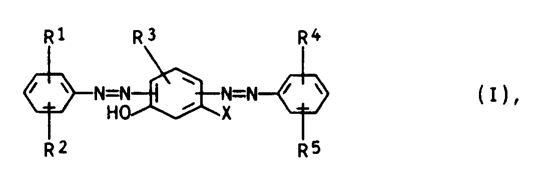 in der
X Hydroxy, Amino oder C₁-C₁₅-Monoalkylamino,
R¹ und R⁴ gleich oder verschieden sind und unabhängig voneinander jeweils C₁-C₁₅-Alkoxycarbonyl, wobei die Alkylgruppe durch 1 bis 3 Sauerstoffatome in Etherfunktion unterbrochen sein kann, einen Rest der Formel 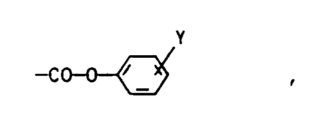 worin Y für C₁-C₁₃-Alkyl, das gegebenenfalls durch 1 bis 3 Sauerstoffatome in Etherfunktion unterbrochen ist, steht, oder C₁-C₁₅-Alkoxy das gegebenenfalls durch 1 bis 3 Sauerstoffatome in Etherfunktion unterbrochen ist,
R² und R⁵ gleich oder verschieden sind und unabhängig voneinander jeweils Wasserstoff, Nitro oder Chlor und
R³ Wasserstoff oder C₁-C₁₃-Alkyl bedeuten,
sowie als Lösungsmittel mindestens ein Produkt, ausgewählt aus der Gruppe, bestehend aus Benzylalkohol, Tridecanol, Isotridecanol, Glykolethern, Olein, Phthalsäure-C₄-C₁₃-dialkylestern, C₅-C₃₀-Chloralkanen, C₁-C₂₀-Alkane, die zweifach durch Phenyl substituiert sind, C₁-C₁₀-Dialkylnaphthalinen und teilhydriertem Terphenyl.

2. Farbstoffzubereitungen nach Anspruch 1, dadurch gekennzeichnet, daß sie 10 bis 80 Gew.-%, bezogen auf das Gewicht der Präparation, an Farbstoff enthalten.

3. Verwendung der flüssigen Farbstoffzubereitungen gemäß Anspruch 1 zur Herstellung von Farbbändern oder Kugelschreiberpasten.

## Claims

1. A liquid dye preparation containing at least one dye of the formula I 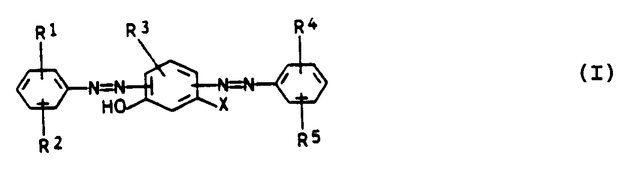 where
X is hydroxyl, amino or C₁-C₁₅-monoalkylamino,
R¹ and R⁴ are identical or different and each is independently of the other C₁-C₁₅-alkoxycarbonyl, wherein the alkyl group can be interrupted by from 1 to 3 oxygen atoms in ether function, a radical of the formula 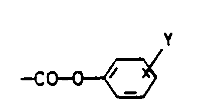 where Y is C₁-C₁₃-alkyl, which can be interrupted by from 1 to 3 oxygen atoms in ether function, or C₁-C₁₅-alkoxy, which can be interrupted by from 1 to 3 oxygen atoms in ether function,
R² and R⁵ are identical or different and each is independently of the other hydrogen, nitro or chlorine, and
R³ is hydrogen or C₁-C₁₃-alkyl,
plus as solvent at least one product selected from the group consisting of benzyl alcohol, tridecanol, isotridecanol, glycol ethers, olein, C₄-C₁₃-dialkyl phthalates, C₅-C₃₀-chloroalkanes, C₁-C₂₀-alkanes disubstituted by phenyl, C₁-C₁₀-dialkylnaphthalenes and partly hydrogenated terphenyl.

2. A dye preparation as claimed in claim 1, containing from 10 to 80 % by weight, based on the weight of the preparation, of dye.

3. The use of a liquid dye preparation as claimed in claim 1 for manufacturing color ribbons or ballpoint pen pastes.

## Revendications

1. Préparations liquides de colorants, contenant au moins un colorant de formule I 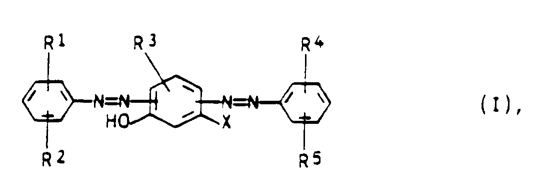 dans laquelle
X représente un groupement hydroxy, amino ou monoalkylamino en C₁-C₁₅,
et R⁴ sont identiques ou différents et représentent chacun, indépendamment l'un de l'autre, un groupement (alcoxy en C₁-C₁₅)carbonyle, le groupement alkyle pouvant être interrompu par 1 à 3 atomes d'oxygène en fonction éther, un reste de formule 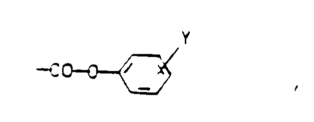 où Y est mis pour un reste alkyle en C₁-C₁₃ qui est éventuellement interrompu par 1 à 3 atomes d'oxygène en fonction éther, ou un groupement alcoxy en C₁-C₁₅ qui est éventuellement interrompu par 1 à 3 atomes d'oxygène en fonction éther,
R² et R⁵ sont identiques ou différents et représentent chacun, indépendamment l'un de l'autre, un atome d'hydrogène, un groupement nitro ou un atome de chlore, et
R³ représente un atome d'hydrogène ou un reste alkyle en C₁-C₁₃,
ainsi que, en tant que solvant, au moins un produit choisi dans le groupe constitué par l'alcool benzylique, le tridécanol, l'isotridécanol, les éthers de glycol, l'oléine, les phtalates de di(alkyle en C₄-C₁₃), les chloroalcanes en C₅-C₃₀, les alcanes en C₁-C₂₀ qui sont substitués deux fois par des restes phényle, les di(alkyle en C₁-C₁₀)naphtalènes et le terphényle partiellement hydrogéné.

2. Préparations de colorants selon la revendication 1, caractérisées en ce qu'elles contiennent de 10 à 80% en poids de colorant, par rapport au poids de la préparation.

3. Utilisation des préparations liquides de colorants selon la revendication 1 pour la fabrication de rubans encrés ou de pâtes pour stylos à bille.
